# EUROPEAN PATENT APPLICATION

(11) **EP 2 357 319 A2**
(43) Date of publication of application: **17.08.2011**
(21) Application number: 10014272.8
(22) Date of filing: 04.11.2010
(51) Int. Cl.: F01C 11/00, F01C 17/02, F04C 18/16, F04C 29/04

(54) **Compressor assembly**

(30) Priority: 10.11.2009 GB 0919643
(71) Applicant: Schmitz, Lothar Peter, Pudsey West Yorkshire LS28 8HE (GB)
(72) Inventor: Schmitz, Lothar Peter, Pudsey West Yorkshire LS28 8HE (GB)
(74) Representative: Reichel, Pavel

(57) **Abstract**

A compressor assembly has a compressor (e.g. a twin helical screw compressor 28) having an inlet (30) and an outlet (32). The compressor is driven by one of two rotary inputs (36, 38) which drive gear means (34) for stepping up the speed of the input. The gear means (34) comprises a planetary gear train which is very compact yet which allows the required step-up ratio to be achieved. The compressor assembly also circulates oil through an external path including cooling means (92) for dispersing heat from the flowing fluid. The circulating fluid also actuates a fluid-operated motor (86) which drives a fan (90) which generates an air current passing over the cooling means (92). A further fluid-operated motor (96) driving a second fan (98) may be provided to generate a current of air for a second cooling means (100) which may, for example, be for cooling the compressed air exiting the compressor.

## Description

The present invention relates to compressor assemblies and in particular, but by no means exclusively, to compressor assemblies for unloading road and rail tankers carrying dry bulk materials.

Tankers carrying dry bulk materials, such as cement, flour, plastic pellets, etc., are unloaded by pressurising the tank with air, typically up to 3 bar absolute pressure. For a road tanker the preferred mounting of the compressor is normally within the chassis of a towing tractor unit. The drive for the compressor is provided by means of a power take off attached to the aperture of the engine gear box of the tractor unit and connected to the compressor via a prop-shaft.

Typically, but not exclusively, screw-type compressors are used. In order to achieve the necessary volumetric efficiency, the screws of a screw compressor must run at relatively high speeds, of the order of 7000 to 9000 rpm. However, the maximum speed of the vehicle power take-off shafts is typically between 1600 and 1800 rpm. Consequently, the speed of the power take-up shaft must be increased by a factor of approximately in 4.5 in order to produce the required speed for the compressor.

Existing screw compressors used on road tankers achieve the step-up by means of a very large gear wheel mounted on the power take-off shaft which engages with a very small pinion connected to the compressor. However, the large gear wheel takes up a great deal of space, making the compressor very large and heavy and in some cases making it impossible for the compressor to fit inside the chassis of the tractor unit. In some cases, it is necessary to mount the compressor outside the chassis and to use alternative drives such as hydraulic drives, belt drives, separate engine drives, electric motor drives and the like, which adds substantially to the cost, weight and maintenance of the installation.

In addition, in recent years, the use of three-axle tractor units has increased, reducing still further the space available to mount the compressor.

Moreover, many haulage operators like to fit larger fuel tanks on the chassis to allow fuel to be bought in the country where it is cheapest. This reduces still further the space available for mounting the compressor or, alternatively, reduces the size of fuel tanks which can be mounted on the chassis.

It is an object of the present invention to provide a compressor assembly which is more compact than the known compressor assemblies.

In accordance with a first aspect of the present invention, a compressor assembly comprises compressor means having an inlet, an outlet and a means for drawing air through the inlet and exhausting compressed air through the outlet, rotary drive input means and gear means for changing the speed of the rotary drive input means and having an input connected to the rotary driving means and an output driving compressor means, the gear means comprising planetary gear means.

In the present context, the term "planetary gear means", refers to a gear set which includes one or more gears rotating about a non-stationary centre.

The use of a planetary gear means takes up much less space than existing step-up gear sets but still allows the required step-up ratio to be achieved.

Preferably, the gear means comprises step-up gear means.

In one embodiment, the planetary gear means comprises a carrier connected to the rotary drive input means, a plurality of planet gears mounted on the carrier and engaging with a fixed annulus and engaging with a sun gear which forms the output of the planetary gear means.

Preferably, the compressor assembly comprises a plurality of rotary drive input means.

Preferably, the plurality of rotary drive input means rotate together. In one embodiment, the compressor assembly comprises a gear mounted on a first rotary drive input means engaging with a gear mounted on a second rotary drive input means.

Preferably, the first and second rotary drive input means are adapted to be rotated in opposite directions. This allows the compressor assembly to be used without modification, irrespective of the direction of the rotation of the power take-off shaft.

In one embodiment, the compressor means comprises first and second rotary inputs driven by the output of the gear means, for example first and second input shafts driven by the output gear means.

Preferably, the first and second input shafts of the compressor means are substantially parallel.

The compressor assembly may further comprise interengaging gears mounted on the first and second input shafts of the compressor. Preferably, the ratio of the interengaging gears of the first and second input shafts of the compressor means is greater than 1.

In one embodiment, the compressor means comprises a helical screw compressor.

Another problem which arises with some existing truck-mounted compressors concerns the cooling of oil used to lubricate the compressor and the cooling of the output of the compressor itself. In each case, it is common to provide coolers for dispersing heat from the oil or air and to generate a flow of air over the coolers by use of a small DC motor wired to the vehicle electrics. However, such electrical installations are normally fitted after manufacture of the vehicle and have been found to be less reliable than factory-fitted electrics, thereby resulting in frequent problems.

In accordance with a second aspect of the present invention, a system having a flow path for fluid comprises pump means for pressurising fluid for flowing along the flow path, cooling means through which the flow path passes for dispersing heat from the flowing fluid, a fluid operated motor actuated by the pressurised fluid and a fan driven by the fluid-operated motor for generating air current passing over the cooling means.

Fluid-operated motors, typically hydraulic motors, are generally very reliable and relatively inexpensive. The second aspect of the present invention thereby provides a reliable source of cooling air for the cooling means.

Preferably, the fluid-operated motor is in the flow path of fluid.

In one embodiment, the system further comprises a second fluid-operated motor actuated by the pressurised fluid. Preferably, the second fluid-operated motor is also in the flow path of the pressurised fluid.

The second fluid-operated motor also preferably drives a second fan. The second fan is preferably adapted to generate an air current passing over a cooling means.

In one embodiment, the second motor is adapted to generate an air current passing over a cooling means for flow of fluid, preferably a flow of fluid other than the fluid which operates as the second fluid-operated motor, for example the output of a compressor. In one embodiment, the output is from a compressor of which the flow path of pressurised fluid generated by the pump forms part.

The system may further comprise pressure relief valve means in the flow path.

The present invention also includes a compressor comprising a system in accordance with the second aspect of the present invention.

By way of example only, specific embodiments of the present invention will now be described, with reference to the accompanying drawings, in which:-
Figs. 1(a) and 1(b) are a side view and end view respectively of an embodiment of screw compressor in accordance with the present invention;
Fig. 2 is a longitudinal cross-section through the screw compressor of Fig. 1;
Fig. 3 is a cross-section through the screw compressor of Fig. 1, looking in the direction of arrows X - X of Fig. 2;
Fig. 4 is a schematic representation showing the operation of the screw compressor of Fig. 1;
Fig. 5 is a schematic representation showing a first variant of the screw compressor of Fig. 1; and
Fig. 6 is a schematic representation showing a second variant of the screw compressor of Fig. 1.

In the following description and the accompanying drawings, the same reference numeral indicates the same feature.

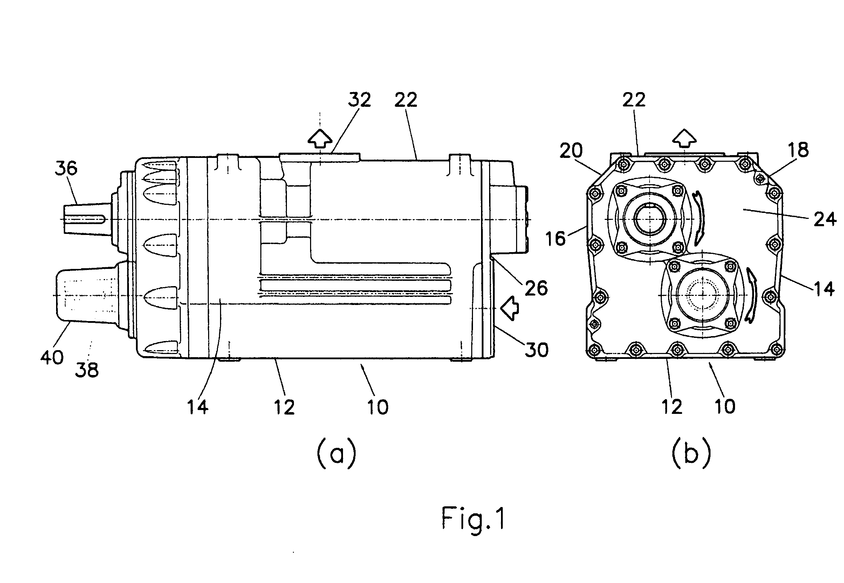

Referring firstly to Figs. 1 to 4, a screw compressor comprises an elongate metal housing 10 having a base wall 12, two generally parallel side walls 14, 16 extending perpendicularly from the base wall, two inclined shoulder portions 18, 20 at the upper end of each of the side walls and a top wall 22 extending parallel to the base wall 12. Two parallel end walls 24, 26 extending perpendicularly to the base, side and top walls 10, 14, 16, 22 are located one at each end of the housing.

The housing 10 encloses a conventional twin helical screw compressor 28, having two helical screws, one female 28a and the other male 28b shown schematically in the drawings, which has an inlet 30 and outlet 32 in the housing 10. The screw compressor is driven by means of a step-up gear box 34, which is typically driven by a power take-off via prop shaft (not shown) of a lorry of other vehicle.

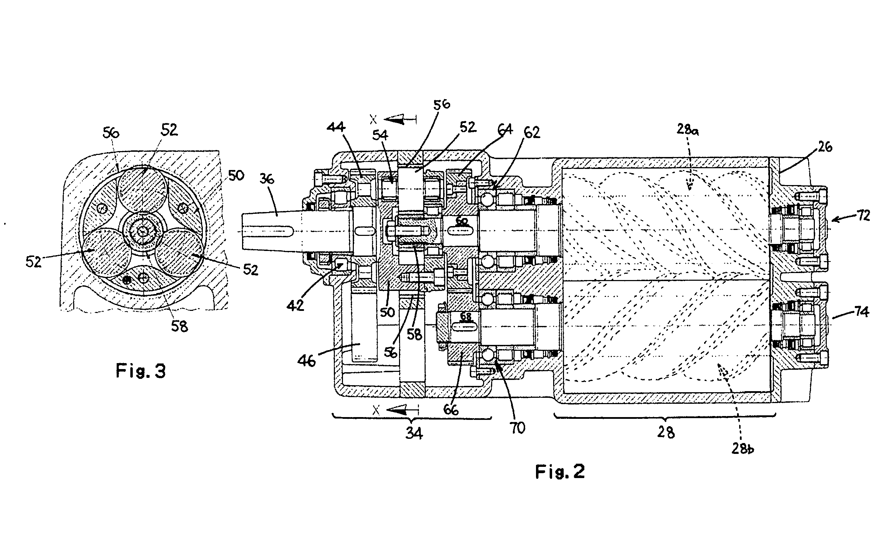

The gear box 34 has two input shafts 36, 38, extending through one of the end walls 24 and offset both vertically and horizontally with respect to each other. Each input shaft 36, 38 is mounted in bearings 42 in the housing (only the bearings for the upper shaft 36 are visible in Fig. 2) and each input shaft 36, 38 carries one of two identical spur gears 44, 46 which meshes with the spur gear carried by the other input shaft, which ensures that both input shafts 36, 38 rotate, irrespective of which one is driven.

It will be noted that the upper input shaft 36 and lower input shaft 38 rotate in opposite directions. This allows the compressor assembly to be used without modification, irrespective of the direction of rotation of the power take-off shaft. In practice, the shaft of the correct rotational sense is connected to the power take-off shaft and the other unused shaft is covered by a removable cap 40.

The upper input shaft 32 is connected to the carrier 50 of a planetary gear set. Three equally-spaced identical planet gears 52 are rotatably mounted on the carrier 50 by means of bearings 54 and engage with an annulus 56 which is fixed with respect to the housing 10. The planet gears 52 also mesh with a sun gear 58 which is connected to an output shaft 60 of the planetary gear set P which forms the input to the female helical screw 28a of the helical screw compressor 28. The output shaft 60 is mounted in bearings 62 in the housing 10 and carries a spur gear 64 which meshes with a spur gear 66 of an input shaft 68 of the male helical screw 28b of the screw compressor 28. The male input shaft 68 is mounted in bearings 70 in the housing and is aligned parallel to the input shaft 60 of the female helical screw 28b. The opposite ends of the helical screw conveyors 28a, 28b are also mounted in bearings 72, 74 in the end wall 26 remote from the input shafts 36, 38.

The spur gear 64 of the input shaft 60 of the female helical conveyor 28a is larger than the spur gear 66 of the input shaft 68 of the male helical conveyor 28b, whereby the male helical conveyor 28a runs faster than the upper helical conveyor. The step-up ratio in the embodiment described is 5:3, but a different step-up ratio, a step -down ratio or a 1:1 ratio may be used instead, depending on the circumstances and in particular depending on the model of helical screw compressor.

In use, the screw compressor is located in the appropriate position, typically on the tractor unit of an articulated lorry, and inlet and output pipes (not shown) are connected to the inlet and outlet 30, 32 respectively. A prop-shaft (not shown) connects the power take-off to one of the two input shafts 36, 38 of the required direction of drive (clockwise or anticlockwise). The protective shaft extension cover is secured over the other, "unused shaft".

To start up the screw compressor, the power take-off is engaged. If the power take-off shaft is connected to the upper input shaft 36, the carrier 50, to which the input shaft is connected, is rotated at the same speed as the input shaft. The interaction of the carrier 50, planet gears 52, fixed ring gear 56 and sun gear 58 produce a step-up ratio, typically of the order of 4.5:1 (although this could be much larger or much smaller) and cause the output shaft 60 of the planetary gear set P to rotate much more quickly than the input shaft 36. The female helical rotor 28a rotates at the same speed as the shaft 60 and, by virtue of the interengaging spur gears 64, 66 on the input shafts 60, 68 of the female and male rotors 28a, 28b, the male rotor is also rotated.

If the prop-shaft is connected to the lower input shaft 38 (with the protective shaft extension cover secured over the protruding end of the upper input shaft 36), the carrier 50 is still rotated at the same speed, by virtue of the meshing of the spur gears 44, 46 on the upper and lower input shafts 36, 38. Operation of the screw compressor is therefore independent of which input shaft 36, 38 is connected to the prop-shaft. However, the rotation of the rotors 28a, 28b is fixed by design and the power take-off rotation can be clockwise or anticlockwise. It is therefore important that the input shafts 36, 38 facilitate rotation in both directions.

The use of a planetary step-up gear set allows the overall size of the compressor assembly to be much more compact than known compressors, which is particularly important if space for installation is limited, for example on the tractor unit of a lorry.

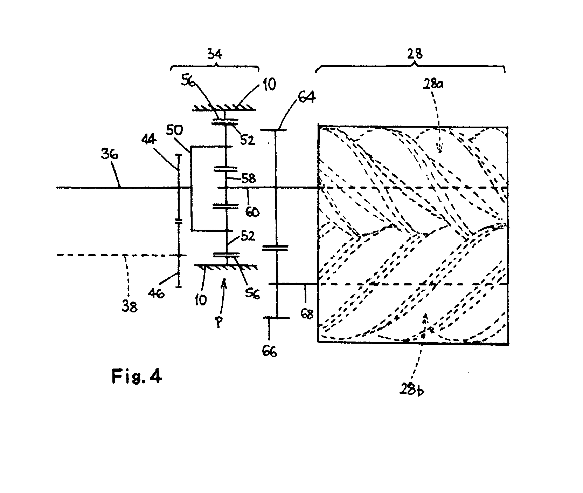

A first variant of the embodiment of Figs. 1 to 3 is shown in Fig. 4. The screw compressor is identical to that of Figs. 1 to 3 and therefore has only been illustrated schematically. The differences from the first embodiment relate to the lubrication system.

The lubrication system comprises an oil pump 80 driven by the lower input shaft 38. The pump 80 draws oil via a filter 81 from a sump 82 in the base of the housing 10 and pumps it out of the housing via a connecting hose 84 to a hydraulic motor 86. A pressure relief valve 88 is also located between the pump 80 and the hydraulic motor 86 in order to protect the pump for excessively high pressures which can occur, for example, if the oil is viscous as a result of low ambient temperature at start-up of the compressor.

The hydraulic motor 86 drives a fan 90 for an oil cooler 92 located downstream of the hydraulic motor (although it could be mounted upstream of the hydraulic motor instead). The cooled oil is then returned to the compressor housing 10 via a hose 94, and is used to lubricate various components of the screw compressor in the normal way, via a plurality of conventional flow restrictors R.

By using a cooling fan which is driven by the pressurised oil, the cooling is not dependent on an external source of power, e.g. electricity, to drive the fan. Moreover, hydraulic systems generally have a high reliability, which minimises the likelihood of breakdowns with the cooling system.

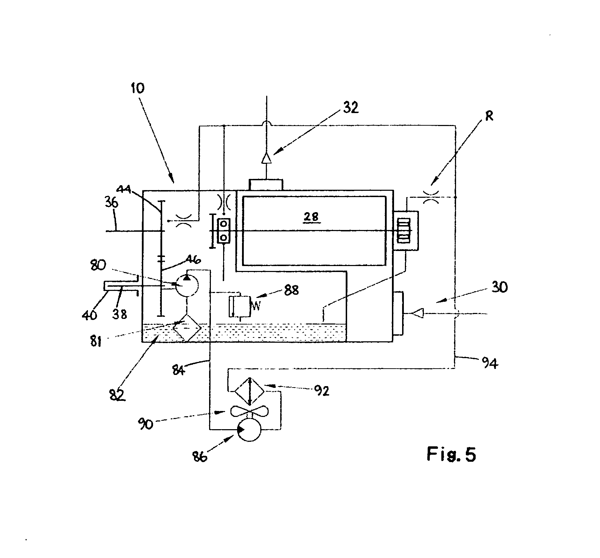

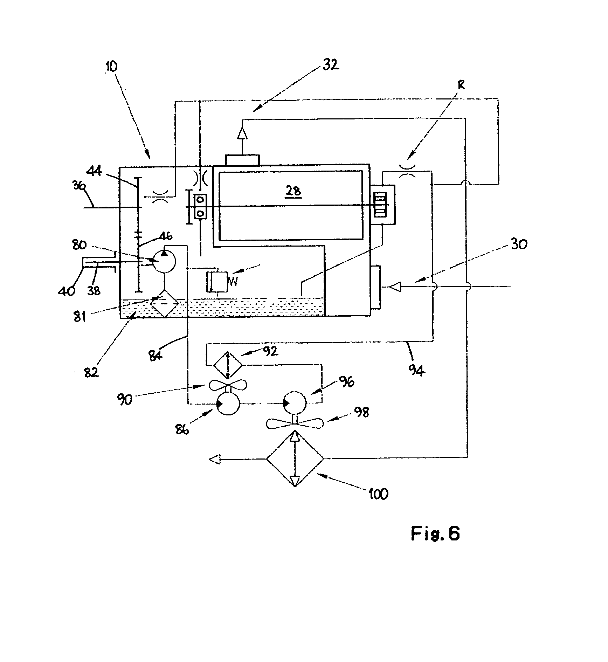

A further variant is shown in Fig. 6. This variant includes all of the features of Fig. 5 and corresponding components have been given the same reference numerals. However, the arrangement of Fig. 6 includes a further hydraulic motor 96, between the first hydraulic motor 86 and the oil cooler 92, which drives a second fan 98 for an air cooler 100 for cooling compressed air emerging from the air outlet 32 of the compressor.

The invention is not restricted to the details of the foregoing embodiments. For example, although the embodiments refer to a screw-compressor, other types of compressor could be used instead, for example a hook and claw compressor. Moreover, although the embodiments are particularly useful when used on a lorry, the invention is not restricted to such use and the compressor could be used in other locations, such as in general industrial use.

## Claims

1. A compressor assembly comprising compressor means having an inlet, an outlet and a means for drawing air through the inlet and exhausting compressed air through the outlet; rotary drive input means; and gear means for changing the speed of the rotary drive input means and having an input connected to the rotary drive input means and an output driving the compressor means, the gear means comprising planetary gear means.

2. A compressor assembly as claimed in claim 1, wherein the gear means comprises step-up gear means.

3. A compressor assembly as claimed in claim 1 or claim 2, wherein the planetary gear means comprises a carrier connected to the rotary drive input means, a plurality of planet gears mounted on the carrier and engaging with a fixed annulus and engaging with a sun gear which forms the output of the planetary gear means.

4. A compressor assembly as claimed in any of the preceding claims, comprising a plurality of rotary drive input means.

5. A compressor assembly as claimed in claim 4, wherein the plurality of rotary drive input means rotates together.

6. A compressor assembly as claimed in claim 5, comprising a gear mounted on a first rotary drive input means engaging with a gear mounted on a second rotary drive input means.

7. A compressor assembly as claimed in any of claims 4 to 6, comprising a first and second rotary drive input means which are adapted to be rotated in opposite directions.

8. A compressor assembly as claimed in any of the preceding claims, wherein the compressor means comprises first and second rotary inputs driven by the output of the gear means.

9. A compressor assembly as claimed in claim 8, comprising first and second input shafts driven by the output of the gear means.

10. A compressor assembly as claimed in claim 9, wherein the first and second input shafts of the compressor means are substantially parallel.

11. A compressor assembly as claimed in claim 9 or claim 10, further comprising interengaging gears mounted on the first and second input shafts of the compressor.

12. A compressor assembly as claimed in claim 11, wherein the ratio of the interengaging gears on the first and second input shafts of the compressor means is greater than 1.

13. A compressor assembly as claimed in any of the preceding claims, wherein the compressor means comprises a helical screw compressor.

14. A system having a flow path for fluid, the system comprising pump means for pressurising fluid for flowing along the flow path, cooling means through which the flow path passes for dispersing heat from the flowing fluid, a fluid-operated motor actuated by the pressurised fluid and a fan driven by the fluid-operated motor for generating an air current passing over the cooling means.

15. A system as claimed in claim 14, wherein the fluid-operated motor is in the flow path of fluid.

16. A system as claimed in claim 14 or claim 15, further comprising a second fluid-operated motor actuated by the pressurised fluid.

17. A system as claimed in claim 16, wherein the second fluid-operated motor is in the flow path of the pressurised fluid.

18. A system as claimed in claim 16 or claim 17, further comprising a second fan driven by the second fluid-operated motor.

19. A system as claimed in claim 18, wherein the second fan is adapted to generate an air current passing over a cooling means.

20. A system as claimed in claim 19, wherein the second motor is adapted to generate an air current passing over a cooling means for a flow of fluid.

21. A system as claimed in claim 20, wherein the second fan is adapted to generate an air current passing over a cooling means for a flow of fluid other than the fluid which operates the second fluid-operated motor.

22. A system as claimed in claim 21, wherein the flow of fluid comprises the output of a compressor.

23. A system as claimed in claim 22, wherein the output is from a compressor of which the flow path of pressurised fluid generated by the pump means forms part.

24. A system as claimed in any of claims 14 to 23, further comprising pressure relief valve means in the flow path.

25. A compressor comprising a system as claimed in any of claims 14 to 24.

26. A compressor assembly substantially as herein described with reference to, and as illustrated in, the accompanying drawings.

27. A system having a flow path for fluid substantially as herein described with reference to, and as illustrated in, the accompanying drawings.
